(19) Europäisches Patentamt / European Patent Office / Office européen des brevets

(11) **EP 2 378 651 B1**

(12) **FASCICULE DE BREVET EUROPEEN**

(45) Date de publication et mention de la délivrance du brevet:
**08.12.2021   Bulletin 2021/49**

(51) Int Cl.:
*H02M 3/158* ^(2006.01)    *H02J 15/00* ^(2006.01)

(21) Numéro de dépôt: **11305324.3**

(22) Date de dépôt: **23.03.2011**

(54) **Procédé et dispositif de pilotage de la tension aux bornes d'une charge propre à être alimentée par un système d'alimentation**

Verfahren und Vorrichtung zur Steuerung der Spannung an den Klemmen einer Last, die über ein Einspeisungssystem mit Strom versorgt wird

Method and device for controlling the voltage at the terminals of a charge suitable for being supplied by a supply system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.03.2010   FR 1052078**

(43) Date de publication de la demande:
**19.10.2011   Bulletin 2011/42**

(73) Titulaire: **GE Energy Power Conversion Technology Limited**
**Rugby**
**Warwickshire CV21 1BU (GB)**

(72) Inventeurs:
• **Gollentz, Bernard**
  **68360, SOULTZ (FR)**
• **Peron, Régis**
  **90000, BELFORT (FR)**
• **Girod, Daniel**
  **90300, CRAVANCHE (FR)**

(74) Mandataire: **Serjeants LLP**
**Dock**
**75 Exploration Drive**
**Leicester, LE4 5NU (GB)**

(56) Documents cités:
**EP-A1- 1 868 279**

• **PERON R ET AL: "Performances analysis of main components used in 60MW pulsed supply for particle accelerator", POWER ELECTRONICS AND APPLICATIONS, 2009. EPE '09. 13TH EUROPEAN CONFERENCE ON, IEEE, PISCATAWAY, NJ, USA, 8 septembre 2009 (2009-09-08), pages 1-10, XP031541470, ISBN: 978-1-4244-4432-8**
• **HIKARU SATO ET AL: "Application of the SMES for the Large Scale Accelerator Magnet Power Supply", IEEE TRANSACTIONS ON APPLIED SUPERCONDUCTIVITY, IEEE SERVICE CENTER, LOS ALAMITOS, CA, US, vol. 17, no. 2, 1 juin 2008 (2008-06-01), pages 779-782, XP011214567, ISSN: 1051-8223**
• **C Fahrni ET AL: "A novel 60 MW Pulsed Power System based on Capacitive Energy Storage for Particle Accelerators", EPE Journal, 1 December 2008 (2008-12-01), pages 5-13, XP055428575, DOI: 10.1080/09398368.2008.11463692 Retrieved from the Internet: URL:http://ieeexplore.ieee.org/ielx5/44171 96/4417197/04417398.pdf?tp=&arnumber=44173 98&isnumber=4417197 [retrieved on 2019-11-07]**

**Description**

La présente invention concerne un procédé de pilotage de la tension aux bornes d'une charge propre à être alimentée par un système d'alimentation en fonction d'une consigne de tension à fournir par le système d'alimentation aux bornes de la charge, la tension aux bornes de la charge comportant une composante résistive et une composante inductive, le système d'alimentation comprenant une pluralité M de convertisseurs d'un courant continu en un autre courant continu connectés en série aux bornes de la charge, constituée de N1 convertisseur(s) de charge connecté(s) en sortie d'une alimentation en courant continu, N1 étant supérieur ou égal à 1, et de N2 convertisseur(s) flottant(s), le(s) N2 convertisseur(s) flottant(s) n'étant pas connecté(s) en sortie de ladite alimentation, N2 étant supérieur ou égal à 1, la somme de N1 et N2 étant égale à M, et au moins un condensateur de stockage monté en parallèle du ou des convertisseurs du côté opposé à la charge, le procédé comprenant les étapes suivantes :

- le calcul de signaux de commande de chacun des M convertisseurs suivant une loi de commande, la loi de commande étant fonction de la consigne de tension, et
- l'application des signaux de commande aux convertisseurs respectifs.

La présente invention concerne également un dispositif de pilotage de la tension aux bornes d'une charge propre à être alimentée par un système d'alimentation.

La présente invention concerne également un système d'alimentation d'une charge comportant un tel dispositif de pilotage.

En particulier, l'invention s'applique à un système d'alimentation de puissance élevée, typiquement de l'ordre de 50 MW. Un tel système d'alimentation est typiquement destiné à alimenter une charge nécessitant d'être alimentée par une alimentation puisée, telle qu'une bobine de guidage d'un synchrotron à protons par exemple.

Un procédé de pilotage et un dispositif de pilotage des types précités sont décrits dans le document EP 1 868 279 A1. Les tensions aux bornes de chaque convertisseur du côté du condensateur de stockage sont équilibrées en tout temps et présentent des valeurs identiques. La valeur de la tension aux bornes de chaque convertisseur du côté de la charge dépendant de celle de la tension aux bornes de chaque convertisseur du côté du condensateur de stockage, la tension délivrée aux bornes de la charge par les convertisseurs est donc répartie à parts égales entre les convertisseurs.

Une telle répartition entre les convertisseurs de la tension délivrée aux bornes de la charge nécessite d'utiliser des condensateurs de stockage avec une capacité de valeur élevée.

Un autre document de l'art antérieur pertinent pour l'invention est le document "C Fahrni ET AL: "A novel 60 MW Pulsed Power System based on Capacitive Energy Storage for Particle Accelerators",EPE Journal, 1 décembre 2008 (2008-12-01), pages 5-13".

Le but de l'invention est de proposer un procédé de pilotage améliorant la répartition entre les convertisseurs de la tension délivrée aux bornes de la charge pour permettre une diminution de la valeur de la capacité des condensateurs de stockage, afin de réduire les coûts et l'encombrement du système d'alimentation.

A cet effet, l'invention a pour objet un procédé de pilotage du type précité, caractérisé en ce que la loi de commande est telle que la composante résistive de la tension aux bornes de la charge est délivrée uniquement par le ou les convertisseur(s) de charge.

Suivant d'autres modes de réalisation, le procédé de pilotage comprend une ou plusieurs des caractéristiques suivantes, prises isolément ou suivant toutes les combinaisons techniquement possibles :

- le calcul des signaux de commande comprend la détermination de coefficients de répartition entre les convertisseurs de la composante inductive de la tension aux bornes de la charge, un premier coefficient de répartition étant associé au(x) convertisseur(s) de charge et un second coefficient de répartition étant associé au(x) convertisseur(s) flottant(s), la composante inductive étant fournie par le(s) convertisseur(s) de charge et le(s) convertisseur(s) flottant(s) en fonction de la puissance électrique fournie par chacun des convertisseurs et des nombres N1 et N2 de convertisseurs respectifs,
- la loi de commande est telle que la tension V1 aux bornes de chaque convertisseur de charge du côté de la charge vérifie l'équation suivante :

$$V1 = \frac{1}{N1}\left(V_{consigne} - N2.K2.V_L\right)$$

où $V_{consigne}$ représente la consigne de tension à fournir par le système d'alimentation aux bornes de la charge,
K2 représente le second coefficient de répartition associé au(x) convertisseur(s) flottant(s), et
$V_L$ représente la composante inductive de la tension aux bornes de la charge,

- la loi de commande est telle que la tension V2 aux bornes de chaque convertisseur flottant du côté de la charge vérifie l'équation suivante :

$$V2 = K2.V_L + \Delta V_{pertes}$$

où K2 représente le second coefficient de répartition associé au(x) convertisseur(s) flottant(s), et
$V_L$ représente la composante inductive de la tension aux bornes de la charge, et
$\Delta V_{pertes}$ représente des pertes estimées pour chaque convertisseur flottant,

- la valeur de la tension continue aux bornes de chaque convertisseur de charge du côté du condensateur de stockage est comprise entre une première valeur minimale et une première valeur maximale, la valeur de la tension continue aux bornes de chaque convertisseur flottant du côté du condensateur de stockage est comprise entre une seconde valeur minimale et une seconde valeur maximale, et les premier et second coefficients sont fonction des première et seconde valeurs minimales, des première et seconde valeurs maximales, et des nombres N1 de convertisseurs de charge et N2 de convertisseurs flottants,
- le premier coefficient de répartition K1 est déterminé à l'aide de l'équation suivante :

$$K1 = \frac{\left(U1max^2 - U1min^2\right)}{N1\ x \left(U1max^2 - U1min^2\right) + N2\ x \left(U2max^2 - U2min^2\right)},$$

où $U1_{min}$ et $U1_{max}$ représentent respectivement la première valeur minimale et la première valeur maximale, et $U2_{min}$ et $U2_{max}$ représentent respectivement la seconde valeur minimale et la seconde valeur maximale,

- le second coefficient de répartition K2 est déterminé à l'aide de l'équation suivante :

$$K2 = \frac{\left(U2max^2 - U2min^2\right)}{N1\ x \left(U1max^2 - U1min^2\right) + N2\ x \left(U2max^2 - U2min^2\right)},$$

où $U1_{min}$ et $U1_{max}$ représentent respectivement la première valeur minimale et la première valeur maximale, et $U2_{min}$ et $U2_{max}$ représentent respectivement la seconde valeur minimale et la seconde valeur maximale,

- les première et seconde valeurs maximales sont des valeurs prédéterminées égales à 5000 V,
- la première valeur minimale est une valeur prédéterminée égale à 3000 V,
- la seconde valeur minimale est une valeur prédéterminée égale à 2000 V,
- les première et seconde valeurs minimales des valeurs prédéterminées vérifient l'inéquation suivante :

$$N1\ x\ U1_{min} + N2\ x\ U2_{min} \geq 10000\ V,$$

où $U1_{min}$ et $U2_{min}$ représentent respectivement les première et seconde valeurs minimales,
- les premier et second coefficients de répartition K1, K2 vérifient l'équation suivante :

$$N1\ x\ K1 + N2\ x\ K2 = 1.$$

L'invention a également pour objet un dispositif de pilotage de la tension aux bornes d'une charge propre à être alimentée par un système d'alimentation en fonction d'une consigne de tension à fournir par le système d'alimentation aux bornes de la charge, la tension aux bornes de la charge comportant une composante résistive et une composante inductive, le système d'alimentation comprenant une pluralité M de convertisseurs d'un courant continu en un autre courant continu connectés en série aux bornes de la charge, N1 convertisseur(s) de charge étant connecté(s) en sortie d'une alimentation en courant continu, N1 étant supérieur ou égal à 1, N2 convertisseur(s) flottant(s) n'étant pas connecté(s) en sortie de ladite alimentation, N2 étant supérieur ou égal à 1, la somme de N1 et N2 étant égale à M, et au moins un condensateur de stockage monté en parallèle du ou des convertisseurs du côté opposé à la charge, le dispositif comprenant :

- des moyens de détermination de la consigne de tension,
- des moyens de commande de chacun des M convertisseurs suivant une loi de commande, la loi de commande étant fonction de la consigne de tension,

caractérisé en ce que la loi de commande est telle que la composante résistive ($V_R$) de la tension aux bornes de la charge est délivrée uniquement par le ou les convertisseur(s) de charge.

L'invention a également pour objet un système d'alimentation d'une charge, du type comprenant :

- une alimentation en courant continu reliée à un réseau électrique,
- M convertisseurs d'un courant continu en un autre courant continu connectés en série aux bornes de la charge, constitués de N1 convertisseur(s) de charge connecté(s) en sortie de l'alimentation en courant continu, N1 étant supérieur ou égal à 1, et de N2 convertisseur(s) flottant(s), le(s) N2 convertisseur(s) flottant(s) n'étant pas connecté(s) en sortie de ladite alimentation, N2 étant supérieur ou égal à 1, la somme de N1 et N2 étant égale à M,
- au moins un condensateur de stockage monté en parallèle du ou des convertisseurs du côté opposé à la charge, et
- un dispositif de pilotage du système,

caractérisé en ce que le dispositif de pilotage est tel que défini ci-dessus.

Suivant un autre mode de réalisation, le système d'alimentation comprend la caractéristique suivante :

- l'alimentation en courant continu comporte au moins un transformateur de tension alternative relié au réseau électrique et au moins un redresseur de tension connecté en sortie du transformateur de tension, chaque convertisseur de charge étant connecté en sortie d'un redresseur respectif.

Ces caractéristiques et avantages de l'invention apparaîtront à la lecture de la description qui va suivre, donnée uniquement à titre d'exemple, et faite en référence aux dessins annexés, sur lesquels :

- la figure 1 est une représentation schématique d'un système d'alimentation selon l'invention,
- la figure 2 est un organigramme du procédé de pilotage selon l'invention, et
- la figure 3 est un ensemble de courbes représentant, en fonction du temps, les tensions aux bornes d'un convertisseur de charge, et respectivement d'un convertisseur flottant, du côté d'un condensateur de stockage correspondant.

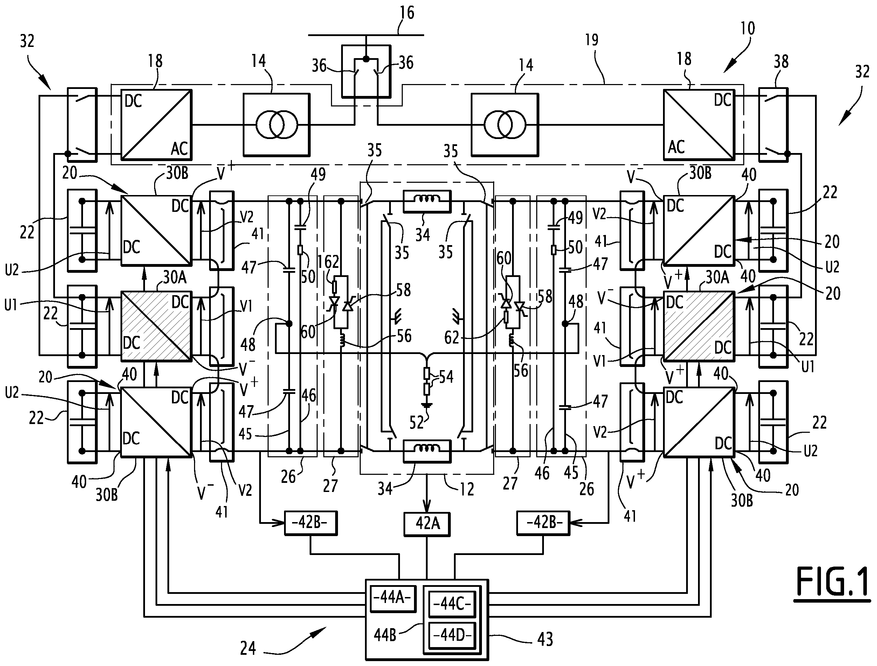

Sur la figure 1, un système 10 d'alimentation d'une charge 12 comprend deux transformateurs de tension alternative 14 reliés à un réseau électrique 16, et deux redresseurs de tension 18, chacun étant connecté en sortie d'un transformateur de tension 14. Les transformateurs de tension 14 et les redresseurs de tension 18 forment une alimentation en courant continu 19 reliée au réseau électrique 16.

Le système d'alimentation 10 comporte également M convertisseurs 20 d'un courant continu en un autre courant continu et M condensateurs de stockage 22, chacun étant monté en parallèle d'un convertisseur 20 respectif. Les M convertisseurs 20 sont connectés en série aux bornes de la charge 12. M est supérieur ou égal à 1.

Le système d'alimentation 10 comporte également un dispositif 24 de pilotage d'une tension V aux bornes de la charge 12, deux filtres 26 connectés entre la charge et les convertisseurs, et deux dispositifs 27 de décharge de la charge en cas de défaut de celle-ci.

Dans l'exemple de réalisation de la figure 1, les M convertisseurs sont constitués de N1 premiers convertisseurs 30A dits convertisseurs de charge connectés en sortie d'un redresseur 18 respectif et de N2 deuxièmes convertisseurs 30B dits convertisseurs flottants. Les N2 convertisseurs flottants 30B ne sont pas connectés directement en sortie des redresseurs. N1 et N2 sont supérieurs ou égaux à 1. La somme de N1 et de N2 est égale à M.

Dans l'exemple de réalisation de la figure 1, M est un nombre pair supérieur ou égal à 4, par exemple égal à 6. N1 est égal à 2, et N2 est égal à 4.

La charge 12 comporte une bobine de guidage d'un synchrotron à protons séparée en deux demi-bobines 34, et des relais 35 d'isolement des demi-bobines 34. La charge 12 présente une inductance Lc, par exemple égale à 9 mH, une résistance interne Rc, par exemple égale à 3,2 m$\Omega$, une capacité Cc, par exemple égale à 22 nF, et une résistance d'amortissement pc, par exemple égale à 136 $\Omega$.

Le courant délivré à la charge 12 présente une intensité Ic et la tension V. La tension V aux bornes de la charge 12 comporte une composante résistive $V_R$ et une composante inductive $V_L$. La composante résistive $V_R$ est la composante de la tension V correspondant aux résistances interne Rc et d'amortissement pc, et est en phase avec le courant propre à circuler dans la charge 12. La composante inductive $V_L$ est la composante de la tension V correspondant à l'inductance Lc, et est déphasée de 90° avec le courant propre à circuler dans la charge 12.

Chaque transformateur de tension alternatif 14 est connecté au réseau électrique 16 par l'intermédiaire d'un premier relais 36.

Le réseau électrique 16 est un réseau alternatif polyphasé propre à délivrer au système d'alimentation 10 un courant comportant une pluralité de phases. Le réseau électrique 16 est, par exemple, un réseau triphasé.

Chaque redresseur 18 est un convertisseur d'un courant alternatif d'entrée en un courant continu de sortie, et est connecté en sortie au premier convertisseur 30A correspondant par l'intermédiaire de deuxièmes relais 38 propres à isoler le premier convertisseur 30A de son redresseur 18 respectif en cas de besoin.

Tous les convertisseurs 20 sont identiques dans leur structure, seule leur loi de commande étant propre à chacun.

Chaque convertisseur 20 d'un courant continu en un autre courant continu, également appelé hacheur, comporte deux premières bornes 40 reliées au condensateur de stockage 22 respectif et deux deuxièmes bornes V+, V-. Chaque borne V+ d'un hacheur 20 est connectée à la borne V- d'un hacheur 20 adjacent, les hacheurs 20 étant connectés en série aux bornes de la charge 12. Les deux deuxièmes bornes V+, V- disposées aux extrémités des hacheurs 20 en série, et non connectées à une deuxième borne correspondante d'un autre hacheur, sont connectées aux bornes de la charge 12.

Chaque convertisseur de charge 30A présente une tension U1 entre ses bornes 40 du côté du condensateur de stockage associé et une tension V1 entre ses bornes V+, V- du côté de la charge. La valeur de la tension continue U1 du côté du condensateur de stockage est comprise entre une première valeur minimale $U1_{min}$ et une première valeur maximale $U1_{max}$. La première valeur maximale $U1_{max}$ et la première valeur minimale $U1_{min}$ sont, par exemple, des valeurs prédéterminées respectivement égales à 5000 V et à 3000 V.

Chaque convertisseur flottant 30B présente une tension U2 entre ses bornes 40 du côté du condensateur de stockage associé et une tension V2 entre ses bornes V+, V- du côté de la charge. La valeur de la tension continue U2 du côté du condensateur de stockage est comprise entre une seconde valeur minimale $U2_{min}$ et une seconde valeur maximale $U2_{max}$. La seconde valeur maximale $U2_{max}$ et la seconde valeur minimale $U2_{min}$ sont, par exemple, des valeurs prédéterminées respectivement égales à 5000 V et à 2000 V.

Les première et seconde valeurs minimales $U1_{min}$, $U2_{min}$ vérifient l'inéquation suivante :

$$N1 \times U1_{min} + N2 \times U2_{min} \geq 10000 \text{ V} \qquad (1)$$

Chaque hacheur 20 est propre à faire varier la tension V1, V2 du courant circulant à travers les deuxièmes bornes V+, V- par rapport à la tension U1, U2 du courant circulant à travers les premières bornes 40. Chaque hacheur 20 est réversible, le courant étant propre à circuler depuis le condensateur 22 correspondant vers la charge 12 au cours d'un intervalle de temps et à circuler dans le sens inverse depuis la charge 12 vers le condensateur 22 au cours d'un autre intervalle de temps.

Chaque hacheur 20 comporte deux modules, non représentés, formant un pont en H. Chaque module est connecté entre les deux premières bornes 40 d'une part, et une deuxième borne V+, V- respective d'autre part. Chaque module comprend une ou plusieurs branche(s) de commutation, de préférence identiques. Chaque branche de commutation forme, par exemple, un onduleur de tension à trois niveaux. En variante, chaque branche de commutation forme un onduleur de tension à deux niveaux.

Tous les condensateurs de stockage 22 sont identiques dans leur structure, et présentent chacun une capacité C.

Le système d'alimentation 10 comporte également M shunts commandables 41, chacun étant disposé en parallèle des deuxièmes bornes V+, V- d'un hacheur respectif. Chaque shunt 41 est propre, lorsqu'il est commandé, à mettre en court-circuit les deux deuxièmes bornes V+, V- du hacheur correspondant.

Le dispositif de pilotage 24 comprend des moyens 42A de détermination d'une consigne de tension $V_{consigne}$ à fournir par le système d'alimentation à la charge 12, des moyens 42B de mesure de l'intensité I d'un courant délivré à la charge 12 par le système d'alimentation, et des moyens 43 de commande de chacun des M convertisseurs 20 suivant une loi de commande.

Les moyens de détermination 42A comportent, par exemple, un dispositif d'acquisition d'un signal comportant la consigne de tension $V_{consigne}$, le signal étant par exemple transmis par la charge 12 toutes les millisecondes.

En variante, les moyens de détermination 42A comportent une mémoire dans laquelle sont stockées des valeurs prédéfinies en fonction du temps de la consigne de tension $V_{consigne}$ à fournir. Le pas d'échantillonnage entre deux valeurs prédéfinies successives est, par exemple, égal à une milliseconde.

Les moyens de mesure 42B comportent, par exemple, un ampèremètre propre à mesurer l'intensité I du courant délivré à la charge.

Les moyens de commande 43 sont reliés aux moyens de détermination 42A d'une part et aux moyens de mesure 42B d'autre part. Les moyens de commande 43 comportent une unité de traitement d'information formée, par exemple, d'un processeur de données 44A associé à une mémoire 44B. La mémoire 44B est apte à stocker un logiciel 44C de calcul de signaux de commande de chacun des convertisseurs 20 suivant la loi de commande et un logiciel 44D d'application des signaux de commande aux convertisseurs 20 respectifs.

En variante, les moyens de commande 43 sont réalisés sous forme de composant logique programmable, ou encore sous forme de circuit intégré dédié.

Chaque filtre 26 est agencé entre la charge 12 et un ensemble de convertisseurs 28 respectifs, et comporte une première branche 45 et une deuxième branche 46, les deux branches 45, 46 étant en parallèle l'une de l'autre. La première branche 45 comprend deux condensateurs 47 connectés en série entre les bornes de la charge 12, les deux condensateurs 47 étant connectés entre eux en un point milieu 48. La deuxième branche 46 comprend un condensateur 49 et une résistance 50 connectés en série entre les bornes de la charge 12. Les points milieux 48 de chacune des premières branches 45 des filtres sont connectés entre eux et reliés à une masse électrique 52 par l'intermédiaire de résistances 54.

Le dispositif de décharge 27 est connecté en parallèle de la charge 12 entre ses bornes respectives. Le dispositif de décharge 27 comporte une bobine 56 connectée en série à un ensemble de composants comportant un premier thyristor 58 connecté en parallèle d'un deuxième thyristor 60 et d'une résistance de décharge 62 connectés en série. Les premier 58 et second 60 thyristors sont connectés tête-bêche.

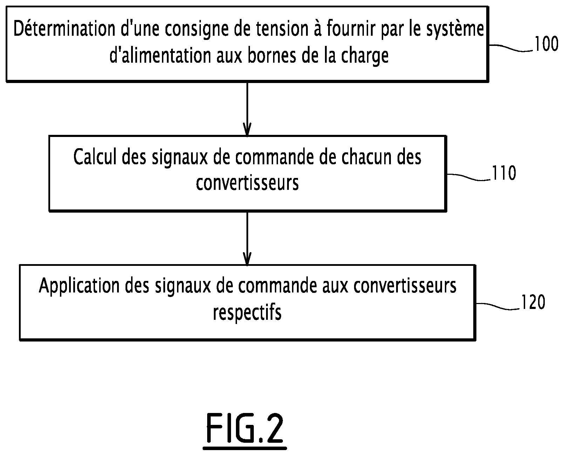

La figure 2 illustre un procédé de pilotage de la tension V aux bornes de la charge en fonction de la consigne de tension $V_{consigne}$ à fournir par le système d'alimentation à la charge.

A l'étape 100, la consigne de tension $V_{consigne}$ à fournir aux bornes de la charge est déterminée à l'aide des moyens de détermination 42A. La valeur de la consigne est, par exemple, acquise toutes les millisecondes à partir d'un signal issu de la charge 12.

En variante, la consigne de tension $V_{consigne}$ est prédéfinie sous forme d'une pluralité d'échantillons associés à des instants de temps respectif.

Le dispositif de pilotage 24 calcule ensuite à l'étape 110 des signaux de commande de chacun des convertisseurs 20 suivant la loi de commande, la loi de commande étant fonction de la consigne de tension $V_{consigne}$.

La loi de commande est telle que la composante résistive $V_R$ de la tension aux bornes de charge est délivrée uniquement par les convertisseurs de charge 30A.

La composante inductive $V_L$ de la tension aux bornes de la charge est quant à elle fournie par les convertisseurs de charge 30A et les convertisseurs flottants 30B en fonction de la puissance électrique fournie par chacun des convertisseurs et des nombres N1 et N2 de convertisseurs 30A, 30B respectifs.

Le dispositif de pilotage 24 applique enfin à l'étape 120 les signaux de commande précédemment calculés aux convertisseurs 20 respectifs, afin de piloter la tension V1 aux bornes de chaque convertisseur de charge 30A du côté de la charge et la tension V2 aux bornes de chaque convertisseur flottant 30B du côté de la charge.

Lors de l'étape 110 décrite ci-dessus, le calcul de signaux de commande comprend la détermination de coefficients de répartition de la composante inductive $V_L$ entre les convertisseurs 30A, 30B, à savoir un premier coefficient de répartition K1 associé aux convertisseurs de charge 30A et un second coefficient de répartition K2 associé aux convertisseurs flottants 30B. Les premier et second coefficients de répartition K1, K2, vérifient l'équation suivante :

$$N1 \times K1 + N2 \times K2 = 1 \tag{1}$$

Les premier et second coefficients de répartition K1, K2 sont fonction des première et seconde valeurs minimales U1min, U2min, des première et seconde valeurs maximales U1max, U2max, et des nombres N1 de convertisseurs de charge et N2 de convertisseurs flottants. Les premier et second coefficients de répartition K1, K2 sont en effet calculés à partir de la variation d'énergie fournis par chacun des convertisseurs, elle-même fonction de la puissance électrique fournie par chacun des convertisseurs. La variation d'énergie $\Delta E1$ fournie par les convertisseurs de charge est définie de manière classique selon l'équation :

$$\Delta E1 = \frac{1}{2} x\, C\, x\, (U1max^2 - U1min^2) \tag{2}$$

De manière analogue, la variation d'énergie $\Delta E2$ fournie par les convertisseurs flottants est définie selon l'équation :

$$\Delta E2 = \frac{1}{2} x\, C\, x\, (U2max^2 - U2min^2) \tag{3}$$

La variation totale d'énergie ΔE étant définie selon la relation suivante :

$$\Delta E = N1 \times \Delta E1 + N2 \times \Delta E2, \qquad (4)$$

et les premier et second coefficients de répartition K1, K2 étant respectivement égaux à ΔE1 / ΔE et à ΔE2 / ΔE, le premier coefficient de répartition K1 est alors calculé à l'aide de l'équation suivante :

$$K1 = \frac{\left(U1max^2 - U1min^2\right)}{N1 \; x \left(U1max^2 - U1min^2\right) + N2 \; x \left(U2max^2 - U2min^2\right)} \qquad (5)$$

De manière analogue, le second coefficient de répartition K2 est calculé à l'aide de l'équation suivante :

$$K2 = \frac{\left(U2max^2 - U2min^2\right)}{N1 \; x \left(U1max^2 - U1min^2\right) + N2 \; x \left(U2max^2 - U2min^2\right)} \qquad (6)$$

La loi de commande de chacun des convertisseurs 20 est alors calculée à l'aide des premier et second coefficients de répartition K1, K2 précédemment déterminés. La loi de commande est telle que la tension V2 aux bornes de chaque convertisseur flottant 30B du côté de la charge ne comporte pas de composante résistive, et vérifie donc l'équation suivante :

$$V2 = K2.V_L + \Delta V_{pertes}, \qquad (7)$$

où $\Delta V_{pertes}$ représente des pertes estimées et prédéfinies pour chaque convertisseur flottant 30B lorsque le courant circule depuis le condensateur 22 correspondant vers la charge 12.

La loi de commande est également telle que la tension V1 aux bornes de chaque convertisseur de charge 30A du côté de la charge vérifie l'équation suivante :

$$V1 = \frac{1}{N1}\left(V_{consigne} - N2.K2.V_L\right) \qquad (8)$$

Autrement dit, la tension V1 aux bornes de chaque convertisseur de charge 30A du côté de la charge est calculée par différence entre la consigne de tension $V_{consigne}$ et la tension V2 aux bornes de chaque convertisseur flottant 30B précédemment déterminée.

En effet, la consigne de tension $V_{consigne}$ vérifie par définition la relation suivante :

$$V_{consigne} = N1 \times V1 + N2 \times V2 + \Delta V, \qquad (9)$$

où ΔV représente la différence de tension entre la consigne de tension $V_{consigne}$ à fournir et la tension réellement délivrée par le système d'alimentation 10 aux bornes de la charge.

On constate alors que la différence de tension ΔV correspond à l'ensemble des pertes pour les convertisseurs flottants 30B puisque ΔV est égal à N2 x $\Delta V_{pertes}$.

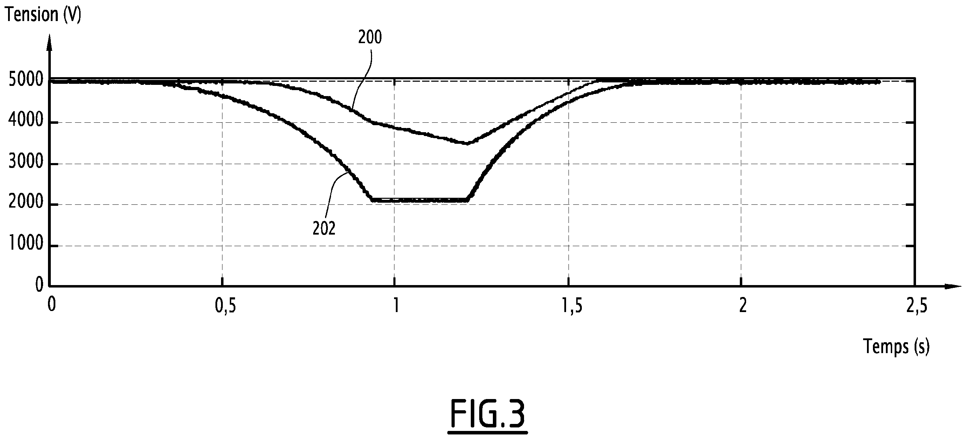

La figure 3 représente des courbes 200 et 202 des tensions aux bornes des convertisseurs 20 du côté du condensateur de stockage 22.

La courbe 200 illustre la tension continue U1 aux bornes de chaque convertisseur de charge 30A du côté du condensateur de stockage.

Dans l'exemple de la figure 3, la première valeur minimale U1min est sensiblement égale à 3500 Volts, et la première valeur maximale U1max est sensiblement égale à 5000 Volts.

La courbe 202 illustre la tension continue U2 aux bornes de chaque convertisseur flottant 30B du côté du condensateur de stockage. La seconde valeur minimale U2min et la seconde valeur maximale U2max sont, dans l'exemple de réalisation de la figure 3, respectivement égale à 2000 Volts et à 5000 Volts.

On conçoit ainsi que le procédé de pilotage et le dispositif de pilotage 24 selon l'invention améliorent la répartition entre les convertisseurs 30A, 30B de la tension délivrée aux bornes de la charge 12, la composante résistive $V_R$ étant délivrée uniquement par les convertisseurs de charge 30A.

Autrement dit, les pertes résistives dans la charge 12 sont directement compensées par l'énergie délivrée par le réseau d'alimentation 16 en complément de l'énergie stockée dans les condensateurs de stockage 22. La capacité C des condensateurs de stockage 22 étant directement dimensionnée par l'énergie à fournir à la charge, cette meilleure répartition entre les convertisseurs de la tension délivrée à la charge permet de diminuer la valeur de la capacité C. Cette diminution de la capacité C des condensateurs de stockage entraîne alors une réduction des coûts et de l'encombrement du système d'alimentation selon l'invention.

**Revendications**

1. Procédé de pilotage de la tension (V) aux bornes d'une charge (12) propre à être alimentée par un système d'alimentation (10) en fonction d'une consigne de tension ($V_{consigne}$) à fournir par le système d'alimentation (10) aux bornes de la charge (12), la charge (12) présentant une résistance (Rc, Pc) et une inductance (Lc), la tension (V) aux bornes de la charge (12) comportant une composante résistive ($V_R$) et une composante inductive ($V_L$), le système d'alimentation (10) comprenant une pluralité M de convertisseurs (20) d'un courant continu en un autre courant continu connectés en série aux bornes de la charge (12), constituée de N1 convertisseur(s) de charge (30A) connecté(s) en sortie d'une alimentation en courant continu (19), N1 étant supérieur ou égal à 1, et de N2 convertisseur(s) flottant(s) (30B), le(s) N2 convertisseur(s) flottant(s) (30B) n'étant pas connecté(s) en sortie de ladite alimentation (19), N2 étant supérieur ou égal à 1, la somme de N1 et N2 étant égale à M, et au moins un condensateur de stockage (22) monté en parallèle de chaque convertisseur (20) respectif du côté opposé à la charge (12), le procédé comprenant les étapes suivantes :

   - le calcul (110) de signaux de commande de chacun des M convertisseurs (20) suivant une loi de commande, la loi de commande étant fonction de la consigne de tension ($V_{consigne}$) et
   - l'application (120) des signaux de commande aux convertisseurs (20) respectifs,

   **caractérisé en ce que** la loi de commande est telle que la composante résistive ($V_R$) de la tension aux bornes de la charge est délivrée uniquement par le ou les convertisseur(s) de charge (30A).

2. Procédé selon la revendication 1, dans lequel le calcul des signaux de commande (110) comprend la détermination de coefficients de répartition (K1, K2) entre les convertisseurs (30A, 30B) de la composante inductive ($V_L$) de la tension aux bornes de la charge, un premier coefficient de répartition (K1) étant associé au(x) convertisseur(s) de charge (30A) et un second coefficient de répartition (K2) étant associé au(x) convertisseur(s) flottant(s) (30B), la composante inductive ($V_L$) étant fournie par le(s) convertisseur(s) de charge (30A) et le(s) convertisseur(s) flottant(s) (30B) en fonction de la puissance électrique fournie par chacun des convertisseurs et des nombres N1 et N2 de convertisseurs (30A, 30B) respectifs.

3. Procédé selon la revendication 2, dans lequel la loi de commande est telle que la tension (V1) aux bornes de chaque convertisseur de charge (30A) du côté de la charge (12) vérifie l'équation suivante :

$$V1 = \frac{1}{N1}\left(V_{consigne} - N2.K2.V_L\right)$$

   où $V_{consigne}$ représente la consigne de tension à fournir par le système d'alimentation (10) aux bornes de la charge (12),
   K2 représente le second coefficient de répartition associé au(x) convertisseur(s) flottant(s) (30B), et
   $V_L$ représente la composante inductive de la tension aux bornes de la charge (12).

4. Procédé selon la revendication 2 ou 3, dans lequel la loi de commande est telle que la tension (V2) aux bornes de chaque convertisseur flottant (30B) du côté de la charge (12) vérifie l'équation suivante :

$$V2 = K2.V_L + \Delta V_{pertes}$$

où K2 représente le second coefficient de répartition associé au(x) convertisseur(s) flottant(s) (30B), et

$V_L$ représente la composante inductive de la tension aux bornes de la charge (12), et

$\Delta V_{pertes}$ représente des pertes estimées pour chaque convertisseur flottant (30B).

5. Procédé selon l'une quelconque des revendications 2 à 4, dans lequel la valeur de la tension continue (U1) aux bornes de chaque convertisseur de charge (30A) du côté du condensateur de stockage (22) est comprise entre une première valeur minimale ($U1_{min}$) et une première valeur maximale ($U1_{max}$), dans lequel la valeur de la tension continue (U2) aux bornes de chaque convertisseur flottant (30B) du côté du condensateur de stockage (22) est comprise entre une seconde valeur minimale ($U2_{min}$) et une seconde valeur maximale ($U2_{max}$), et dans lequel les premier et second coefficients (K1, K2) sont fonction des première et seconde valeurs minimales ($U1_{min}$, $U2_{min}$), des première et seconde valeurs maximales ($U1_{max}$, $U2_{max}$), et des nombres N1 de convertisseurs de charge et N2 de convertisseurs flottants.

6. Procédé selon la revendication 5, dans lequel le premier coefficient de répartition (K1) est déterminé à l'aide de l'équation suivante :

$$K1 = \frac{\left(U1max^2 - U1min^2\right)}{N1 \ x \left(U1max^2 - U1min^2\right) + N2 \ x \left(U2max^2 - U2min^2\right)},$$

où $U1_{min}$ et $U1_{max}$ représentent respectivement la première valeur minimale et la première valeur maximale, et $U2_{min}$ et $U2_{max}$ représentent respectivement la seconde valeur minimale et la seconde valeur maximale.

7. Procédé selon la revendication 5 ou 6, dans lequel le second coefficient de répartition (K2) est déterminé à l'aide de l'équation suivante :

$$K2 = \frac{\left(U2max^2 - U2min^2\right)}{N1 \ x \left(U1max^2 - U1min^2\right) + N2 \ x \left(U2max^2 - U2min^2\right)},$$

où $U1_{min}$ et $U1_{max}$ représentent respectivement la première valeur minimale et la première valeur maximale, et $U2_{min}$ et $U2_{max}$ représentent respectivement la seconde valeur minimale et la seconde valeur maximale.

8. Procédé selon l'une quelconque des revendications 5 à 7, dans lequel les première et seconde valeurs maximales ($U1_{max}$, $U2_{max}$) sont des valeurs prédéterminées égales à 5000 V.

9. Procédé selon l'une quelconque des revendications 5 à 8, dans lequel la première valeur minimale ($U1_{min}$) est une valeur prédéterminée égale à 3000 V.

10. Procédé selon l'une quelconque des revendications 5 à 9, dans lequel la seconde valeur minimale ($U2_{min}$) est une valeur prédéterminée égale à 2000 V.

11. Procédé selon l'une quelconque des revendications 5 à 10, dans lequel les première et seconde valeurs minimales ($U1_{min}$, $U2_{min}$) des valeurs prédéterminées vérifient l'inéquation suivante :

$$N1 \ x \ U1_{min} + N2 \ x \ U2_{min} \geq 10000 \ V,$$

où $U1_{min}$ et $U2_{min}$ représentent respectivement les première et seconde valeurs minimales.

12. Procédé selon l'une quelconque des revendications 2 à 11, dans lequel les premier et second coefficients de répartition (K1, K2) vérifient l'équation suivante :

$$N1 \ x \ K1 + N2 \ x \ K2 = 1.$$

**13.** Dispositif (24) de pilotage de la tension (V) aux bornes d'une charge (12) propre à être alimentée par un système d'alimentation (10) en fonction d'une consigne de tension ($V_{consigne}$) à fournir par le système d'alimentation (10) aux bornes de la charge (12), la charge (12) présentant une résistance (Rc, Pc) et une inductance (Lc), la tension (V) aux bornes de la charge (12) comportant une composante résistive ($V_R$) et une composante inductive ($V_L$), le système d'alimentation (10) comprenant une pluralité M de convertisseurs (20) d'un courant continu en un autre courant continu connectés en série aux bornes de la charge (12), N1 convertisseur(s) de charge (30A) étant connecté(s) en sortie d'une alimentation en courant continu (19), N1 étant supérieur ou égal à 1, N2 convertisseur(s) flottant(s) (30B) n'étant pas connecté(s) en sortie de ladite alimentation (19), N2 étant supérieur ou égal à 1, la somme de N1 et N2 étant égale à M, et au moins un condensateur de stockage (22) monté en parallèle d'un convertisseur (20) respectif du côté opposé à la charge (12), le dispositif (24) comprenant :

- des moyens (42A) de détermination de la consigne de tension ($V_{consigne}$),
- des moyens (43) de commande de chacun des M convertisseurs (20) suivant une loi de commande, la loi de commande étant fonction de la consigne de tension ($V_{consigne}$),

**caractérisé en ce que** la loi de commande est telle que la composante résistive ($V_R$) de la tension aux bornes de la charge est délivrée uniquement par le ou les convertisseur(s) de charge (30A).

**14.** Système (10) d'alimentation d'une charge (12), du type comprenant :

- une alimentation en courant continu (19) configurée pour être reliée à un réseau électrique (16),
- M convertisseurs (20) d'un courant continu en un autre courant continu configurés pour être connectés en série aux bornes de la charge (12), constitués de N1 convertisseur(s) de charge (30A) connecté(s) en sortie de l'alimentation en courant continu (19), N1 étant supérieur ou égal à 1, et de N2 convertisseur(s) flottant(s) (30B), le(s) N2 convertisseur(s) flottant(s) (30B) n'étant pas connecté(s) en sortie de ladite alimentation (19), N2 étant supérieur ou égal à 1, la somme de N1 et N2 étant égale à M,
- au moins un condensateur de stockage (22) monté en parallèle de chaque convertisseur (20) respectif du côté opposé à la charge (12), et
- un dispositif (24) de pilotage du système,

**caractérisé en ce que** le dispositif de pilotage (24) est conforme à la revendication 13.

**15.** Système (10) selon la revendication 14, dans lequel l'alimentation en courant continu (19) comporte au moins un transformateur de tension alternative (14) configuré pour être relié au réseau électrique (16) et au moins un redresseur de tension (18) connecté en sortie du transformateur de tension (14), chaque convertisseur de charge (30A) étant connecté en sortie d'un redresseur (18) respectif.

**Patentansprüche**

**1.** Verfahren zur Steuerung der Spannung (V) an den Klemmen einer Last (12), die über ein Einspeisungssystem (10) mit Strom versorgt wird, in Abhängigkeit von einer Spannungsvorgabe ($V_{soll}$), die von dem Einspeisungssystem (10) an die Klemmen der Last (12) zu liefern ist, wobei die Last (12) einen Widerstand (Rc, Pc) und eine Induktanz (Lc) aufweist, wobei die Spannung (V) an den Klemmen der Last (12) eine resistive Komponente ($V_R$) und eine induktive Komponente ($V_L$) umfasst, wobei das Einspeisungssystem (10) eine Vielzahl M von Wandlern (20) eines Gleichstroms in einen anderen Gleichstrom umfasst, die an den Klemmen der Last (12) in Reihe geschaltet sind, zusammengesetzt aus N1 Lastwandler(n) (30A), der (die) am Ausgang einer Gleichstromeinspeisung (19) geschaltet ist (sind), wobei N1 größer oder gleich 1 ist, und aus N2 schwebende(n) Wandler(n) (30B), wobei der (die) N2 schwebende(n) Wandler (30B) nicht am Ausgang der Einspeisung (19) geschaltet ist (sind), wobei N2 größer oder gleich 1 ist, wobei die Summe von N1 und N2 gleich M ist, und mindestens einen Speicherkondensator (22), der parallel zu jedem jeweiligen Wandler (20) auf der gegenüberliegenden Seite der Last (12) angebracht ist, wobei das Verfahren die folgenden Schritte umfasst:

- die Berechnung (110) von Steuersignalen jedes der M Wandler (20) gemäß einem Steuergesetz, wobei das Steuergesetz von der Spannungsvorgabe (Vsoll) abhängt, und
- die Anwendung (120) der Steuersignale an den jeweiligen Wandlern (20),

**dadurch gekennzeichnet, dass** das Steuergesetz derart ist, dass die resistive Komponente ($V_R$) der Spannung an den Klemmen der Last nur durch den oder die Lastwandler (30A) geliefert wird.

2. Verfahren nach Anspruch 1, wobei die Berechnung der Steuersignale (110) die Bestimmung von Aufteilungskoeffizienten (K1, K2) zwischen den Wandlern (30A, 30B) der induktiven Komponente ($V_L$) der Spannung an den Klemmen der Last umfasst, wobei ein erster Aufteilungskoeffizient (K1) mit dem (den) Lastwandler(n) (30A) verknüpft ist und ein zweiter Aufteilungskoeffizient (K2) mit dem (den) schwebenden Wandler(n) (30B) verknüpft ist, wobei die induktive Komponente ($V_L$) von dem (den) Lastwandler(n) (30A) und dem (den) schwebenden Wandler(n) (30B) in Abhängigkeit von der von jedem der Wandler gelieferten elektrischen Leistung und der Anzahl N1 und N2 an Wandlern (30A, 30B) geliefert wird.

3. Verfahren nach Anspruch 2, wobei das Steuergesetz derart ist, dass die Spannung (V1) an den Klemmen jedes Lastwandlers (30A) auf der Seite der Last (12) die folgende Gleichung erfüllt:

$$V1 = \frac{1}{N1}\left(V_{soll} - N2.K2.V_L\right)$$

wo Vsoll die von dem Einspeisungssystem (10) an die Klemmen der Last (12) zu liefernde Vorgabespannung darstellt,
K2 den zweiten Aufteilungskoeffizienten, der mit dem (den) schwebenden Wandler(n) (30B) verknüpft ist, darstellt, und
$V_L$ die induktive Komponente der Spannung an den Klemmen der Last (12) darstellt.

4. Verfahren nach Anspruch 2 oder 3, wobei das Steuergesetz derart ist, dass die Spannung (V2) an den Klemmen jedes schwebenden Wandlers (30B) auf der Seite der Last (12) die folgende Gleichung erfüllt:

$$V2 = K2.VL + \Delta V_{verluste}$$

wo K2 den zweiten Aufteilungskoeffizienten, der mit dem (den) schwebenden Wandler(n) (30B) verknüpft ist, darstellt, und
$V_L$ die induktive Komponente der Spannung an den Klemmen der Last (12) darstellt, und
$\Delta V_{verluste}$ die geschätzten Verluste für jeden schwebenden Wandler (30B) darstellt.

5. Verfahren nach einem der Ansprüche 2 bis 4, wobei der Gleichspannungswert (U1) an den Klemmen jedes Lastwandlers (30A) auf der Seite des Speicherkondensators (22) zwischen einem ersten Mindestwert ($U1_{min}$) und einem ersten Höchstwert ($U1_{max}$) liegt, wobei der Gleichspannungswert (U2) an den Klemmen jedes schwebenden Wandlers (30B) auf der Seite des Speicherkondensators (22) zwischen einem zweiten Mindestwert ($U2_{min}$) und einem zweiten Höchstwert ($U2_{max}$) liegt, und wobei der erste und der zweite Koeffizient (K1, K2) von dem ersten und zweiten Mindestwert ($U1_{min}$, $U2_{min}$), dem ersten und zweiten Höchstwert ($U2_{max}$, $U2_{max}$), der Anzahl N1 an Lastwandlern und der Anzahl N2 an schwebenden Wandlern abhängen.

6. Verfahren nach Anspruch 5, wobei der erste Aufteilungskoeffizient (K1) mit Hilfe der folgenden Gleichung bestimmt wird:

$$K1 = \frac{(U1max^2 - U1min^2)}{N1\,x\,(U1max^2 - U1min^2) + N2\,x\,(U2max^2 - U2min^2)},$$

wo $U1_{min}$ und $U1_{max}$ den ersten Mindestwert bzw. den ersten Höchstwert darstellen, und
$U2_{min}$ und $U2_{max}$ den zweiten Mindestwert bzw. den zweiten Höchstwert darstellen.

7. Verfahren nach Anspruch 5 oder 6, wobei der zweite Aufteilungskoeffizient (K2) mit Hilfe der folgenden Gleichung bestimmt wird:

$$K2 = \frac{(U2max^2 - U2min^2)}{N1\,x\,(U1max^2 - U1min^2) + N2\,x\,(U2max^2 - U2min^2)},$$

wo U1$_{min}$ und U1$_{max}$ den ersten Mindestwert bzw. den ersten Höchstwert darstellen, und U2$_{min}$ und U2$_{max}$ den zweiten Mindestwert bzw. den zweiten Höchstwert darstellen.

8. Verfahren nach einem der Ansprüche 5 bis 7, wobei der erste und der zweite Höchstwert (U1$_{max}$, U2$_{max}$) vorbestimmte Werte gleich 5000 V sind.

9. Verfahren nach einem der Ansprüche 5 bis 8, wobei der erste Mindestwert (U1$_{min}$) ein vorbestimmter Werte gleich 3000 V ist.

10. Verfahren nach einem der Ansprüche 5 bis 9, wobei der zweite Mindestwert (U2$_{min}$) ein vorbestimmter Wert gleich 2000 V ist.

11. Verfahren nach einem der Ansprüche 5 bis 10, wobei der erste und der zweite Mindestwert (U1$_{min}$, U2$_{min}$) vorbestimmte Werte sind, die die folgende Ungleichung erfüllen:

$$N1 \times U1min + N2 \times U2_{min} \geq 10000 \text{ V},$$

wo U1$_{min}$ und U2$_{min}$ den ersten Mindestwert bzw. den zweiten Mindestwert darstellen.

12. Verfahren nach einem der Ansprüche 2 bis 11, wobei der erste und der zweite Aufteilungskoeffizient (K1, K2) die folgende Gleichung erfüllen:

$$N1 \times K1 + N2 \times K2 = 1.$$

13. Vorrichtung (24) zur Steuerung der Spannung (V) an den Klemmen einer Last (12), die über ein Einspeisungssystem (10) mit Strom versorgt wird, in Abhängigkeit von einer Spannungsvorgabe (Vsoll), die von dem Einspeisungssystem (10) an die Klemmen der Last (12) zu liefern ist, wobei die Last (12) einen Widerstand (Rc, Pc) und eine Induktanz (Lc) aufweist, wobei die Spannung (V) an den Klemmen der Last (12) eine resistive Komponente (V$_R$) und eine induktive Komponente (V$_L$) umfasst, wobei das Einspeisungssystem (10) eine Vielzahl M von Wandlern (20) eines Gleichstroms in einen anderen Gleichstrom umfasst, die an den Klemmen der Last (12) in Reihe geschaltet sind, N1 Lastwandler (30A), der (die) am Ausgang einer Gleichstromeinspeisung (19) geschaltet ist (sind), wobei N1 größer oder gleich 1 ist, N2 schwebende Wandler (30B), der (die) nicht am Ausgang der Einspeisung (19) geschaltet ist (sind), wobei N2 größer oder gleich 1 ist, wobei die Summe von N1 und N2 gleich M ist, und mindestens einen Speicherkondensator (22), der parallel zu einem jeweiligen Wandler (20) auf der gegenüberliegenden Seite der Last (12) angebracht ist, wobei die Vorrichtung (24) umfasst:

- Mittel (42A) zur Bestimmung der Vorgabespannung (Vsoll),
- Mittel (43) zur Steuerung jedes der M Wandler (20) gemäß einem Steuergesetz, wobei das Steuergesetz von der Spannungsvorgabe (Vsoll) abhängt,

**dadurch gekennzeichnet, dass** das Steuergesetz derart ist, dass die resistive Komponente (V$_R$) der Spannung an den Klemmen der Last nur durch den oder die Lastwandler (30A) geliefert wird.

14. System (10) zur Einspeisung einer Last (12) des Typs, der umfasst:

- eine Gleichstromeinspeisung (19), die konfiguriert ist, um an ein elektrisches Netz (16) angeschlossen zu werden,
- M Wandler (20) eines Gleichstroms in einen anderen Gleichstrom, die konfiguriert sind, um an den Klemmen der Last (12) in Reihe geschaltet zu sein, zusammengesetzt aus N1 Lastwandler(n) (30A), der (die) am Ausgang der Gleichstromeinspeisung (19) geschaltet ist (sind), wobei N1 größer oder gleich 1 ist, und aus N2 schwebenden Wandler(n) (30B), wobei der (die) N2 schwebende(n) Wandler (30B) nicht am Ausgang der Einspeisung (19) geschaltet ist (sind), wobei N2 größer oder gleich 1 ist, wobei die Summe von N1 und N2 gleich M ist,
- mindestens einen Speicherkondensator (22), der parallel zu jedem jeweiligen Wandler (20) auf der gegenüberliegenden Seite der Last (12) angebracht ist, und
- eine Vorrichtung (24) zur Steuerung des Systems,

**dadurch gekennzeichnet, dass** die Steuervorrichtung (24) konform mit Anspruch 13 ist.

15. System (10) nach Anspruch 14, wobei die Gleichstromeinspeisung (19) mindestens einen Wechselspannungstransformator (14) umfasst, der konfiguriert ist, um an das elektrische Netz angeschlossen zu werden, und mindestens einen Spannungsgleichrichter (18), der am Ausgang des Spannungstransformators (14) geschaltet ist, wobei jeder Lastwandler (30A) am Ausgang eines jeweiligen Gleichrichters (18) geschaltet ist.

**Claims**

1. Method for controlling the voltage (V) at the load terminals (12) specific to being supplied by a supply system (10) according to a voltage setpoint ($V_{setpoint}$) to be supplied by the supply system (10) to the load terminals (12), the load (12) having a resistance (Rc, Pc) and an inductance (Lc), the voltage (V) at the load terminals (12) comprising a resistive component ($V_R$) and an inductive component ($V_L$), the supply system (10) comprising a plurality M of converters (20) of a direct current into another direct current connected in series to the load terminals (12), consisting of N1 load converter(s) (30A) connected to the output of a supply of direct current (19), N1 being greater than or equal to 1, and of N2 floating converter(s) (30B), the floating converter(s) (30B) not being connected to the output of said supply (19), N2 being greater than or equal to 1, the sum of N1 and N2 being equal to M, and at least one storage condenser (22) mounted in parallel of each respective converter (20) on the side opposite the load (12), the method comprising the following steps:

   - calculating (110) control signals of each of the M converters (20) along a control law, the control law being a function of the voltage setpoint ($V_{setpoint}$), and
   - applying (120) control signals to the respective converters (20),

   **characterised in that** the control law is such that the resistive component ($V_R$) of the voltage at the load terminals is delivered uniquely by the load converter(s) (30A).

2. Method according to claim 1, wherein the calculation of control signals (110) comprises the determination of distribution coefficients (K1, K2) between the converters (30A, 30B) of the inductive component ($V_L$) of the voltage at the load terminals, a first distribution coefficient (K1) being associated with the load converter(s) (30A) and a second distribution coefficient (K2) being associated with the floating converter(s) (30B), the inductive component ($V_L$) being supplied by the load converter(s) (30A) and the floating converter(s) (30B) according to the electric power supplied by each of the converters and to the numbers N1 and N2 of respective converters (30A, 30B).

3. Method according to claim 2, wherein the control law is such that the voltage (V1) at the terminals of each load converter (30A) on the side of the load (12) verifies the following equation:

$$V1 = \frac{1}{N1}(V_{setpoint} - N2.K2.V_L)$$

   where $V_{setpoint}$ represents the voltage setpoint to be supplied by the supply system (10) to the load terminals (12),
   K2 represents the second distribution coefficient associated with the floating converter(s) (30B), and
   $V_L$ represents the inductive component of the voltage at the load terminals (12).

4. Method according to claim 2 or 3, wherein the control law is such that the voltage (V2) at the terminals of each floating converter (30B) on the side of the load (12) verifies the following equation:

$$V2 = K2.V_L + \Delta V_{losses}$$

   where K2 represents the second distribution coefficient associated with the floating converter(s) (30B), and
   $V_L$ represents the inductive component of the voltage at the load terminals (12), and
   $\Delta V_{losses}$ represents the estimated losses for each floating converter (30B).

5. Method according to any one of claims 2 to 4, wherein the value of the direct voltage (U1) at the terminals of each load converter (30A) on the side of the storage condenser (22) is comprised between a first minimum value ($U1_{min}$)

and a first maximum value ($U1_{max}$), wherein the value of the continuous voltage (U2) at the terminals of each floating converter (30B) on the side of the storage condenser (22) is comprised between a second minimum value ($U2_{min}$) and a second maximum value ($U2_{max}$), and wherein the first and second coefficients (K1, K2) are a function of the first and second minimum values ($U1_{min}$, $U2_{min}$), of the first and second maximum values ($U1_{max}$, $U2_{max}$), and of the numbers N1 of load converters and N2 of floating converters.

6. Method according to claim 5, wherein the first distribution coefficient (K1) is determined using the following equation:

$$K1 = \frac{(U1max^2 - U1min^2)}{N1 \; x(U1max^2 - U1min^2) + N2 \; x(U2max^2 - U2min^2)}$$

where $U1_{min}$ and $U1_{max}$ represent respectively the first minimum value and the first maximum value, and $U2_{min}$ and $U2_{max}$ represent respectively the second minimum value and the second maximum value.

7. Method according to claim 5 or 6, wherein the second distribution coefficient (K2) is determined using the following equation:

$$K2 = \frac{(U2max^2 - U2min^2)}{N1 \; x(U1max^2 - U1min^2) + N2 \; x(U2max^2 - U2min^2)}$$

where $U1_{min}$ and $U1_{max}$ represent respectively the first minimum value and the first maximum value, and $U2_{min}$ and $U2_{max}$ represent respectively the second minimum value and the second maximum value.

8. Method according to any one of claims 5 to 7, wherein the first and second maximum values ($U1_{max}$, $U2_{max}$) are predetermined values equal to 5000V.

9. Method according to any one of claims 5 to 8, wherein the first minimum value ($U1_{min}$) is a predetermined value equal to 3000V.

10. Method according to any one of claims 5 to 9, wherein the second minimum value ($U2_{min}$) is a predetermined value equal to 2000V.

11. Method according to any one of claims 5 to 10, wherein the first and second minimum values ($U1_{min}$, $U2_{min}$) of the predetermined values verify the following

equation: $N1 \; x \; U1_{min} + N2 \; x \; U2_{min} \geq 10000V$,

where $U1_{min}$ and $U2_{min}$ represent respectively the first and second minimum values.

12. Method according to any one of claims 2 to 11, wherein the first and second distribution coefficients (K1, K2) verify the following equation:

$$N1 \; x \; K1 + N2 \; x \; K2 = 1.$$

13. Device (24) for controlling the voltage (V) at the load terminals (12) specific to being supplied by a supply system (10) according to a voltage setpoint ($V_{setpoint}$) to be supplied by the supply system (10) to the load terminals (12), the load (12) having a resistance (Rc, Pc) and an inductance (Lc), the voltage (V) at the load terminals (12) comprising a resistive component ($V_R$) and an inductive component ($V_L$), the supply system (10) comprising a plurality M of converters (20) of a direct current into another direct current connected in series to the load terminals (12), N1 load converter(s) (30A) being connected to the output of a supply of direct current (19), N1 being greater than or equal to 1, and of N2 floating converter(s) (30B), not being connected at the output of said supply (19), N2 being greater than or equal to 1, the sum of N1 and N2 being equal to M, and at least one storage condenser (22) mounted in parallel of each respective converter (20) on the side opposite the load (12), the device (24) comprising:

- means (42A) for determining the voltage setpoint ($V_{setpoint}$),
- means (43) for controlling each of the M converters (20) along a control law, the control law being a function of the voltage setpoint ($V_{setpoint}$),

**characterised in that** the control law is such that the resistive component ($V_R$) of the voltage at the load terminals is delivered uniquely by the load converters (30A).

14. System (10) for supplying a load (12), of the type comprising:

- a direct current supply (19) configured to be connected to an electric network (16),
- M converters (20) of a direct current into another direct current configured to be connected in series to the load terminals (12), consisting of N1 load converters (30A) connected to the output of the direct current supply (19), N1 being greater than or equal to 1, and of N2 floating converter(s) (30B), the N2 floating converter(s) (30B) not being connected to the output of said supply (19), N2 being greater than or equal to 1, the sum of N1 and N2 being equal to M,
- at least one storage condenser (22) mounted in parallel from each respective converter (20) on the side opposite the load (12), and
- a device (24) for controlling the system,

**characterised in that** the control device (24) complies with claim 13.

15. System (10) according to claim 14, wherein the direct current supply (19) comprises at least one alternating voltage transformer (14) configured to be connected to the electric network (16) and at least one voltage rectifier (18) connected to the output of the voltage transformer (14), each load converter (30A) being connected to the output of a respective rectifier (18).

FIG.1

Détermination d'une consigne de tension à fournir par le système d'alimentation aux bornes de la charge — 100

Calcul des signaux de commande de chacun des convertisseurs — 110

Application des signaux de commande aux convertisseurs respectifs — 120

## FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• EP 1868279 A1

**Littérature non-brevet citée dans la description**

• **FAHRNI et al.** A novel 60 MW Pulsed Power System based on Capacitive Energy Storage for Particle Accelerators. *EPE Journal,* 01 Décembre 2008, 5-13